Europäisches Patentamt

**European Patent Office**

**Office européen des brevets**

(11) Publication number: **0 294 891 B1**

## EUROPEAN PATENT SPECIFICATION

(45) Date of publication of patent specification: **26.08.92**

(51) Int. Cl.⁵: **G06F 9/46**, G06F 15/16

(21) Application number: **88201146.3**

(22) Date of filing: **06.06.88**

(54) **Office automation system.**

(30) Priority: **09.06.87 NL 8701330**

(43) Date of publication of application:
**14.12.88 Bulletin 88/50**

(45) Publication of the grant of the patent:
**26.08.92 Bulletin 92/35**

(84) Designated Contracting States:
**DE FR GB IT NL**

(56) References cited:
**GB-A- 2 069 734**

**THE 6TH INTERNATIONAL CONFERENCE ON DISTRIBUTED COMPUTING SYSTEMS, Cambridge, 19th-23rd May 1986, pages 250-259, IEEE, New York, US; R.E. SCHANTZ et al.: "The architecture of the Cronus distributed operating system"**

**PROCEEDINGS REAL-TIME SYSTEMS SYMPOSIUM, New Orleans, 2nd-4th December 1986, pages 157-163, IEEE, New York, US; D.C. DANIELS et al.: "Real-time performance of a completely distributed operating system"**

**IEE PROCEEDINGS, vol. 131, no. 2, March**

**1984, pages 38-44, Old Woking, Surrey, GB; R. HULL et al.: "Virtual resource ring: technique for decentralised resource management in fault-tolerant distributed computer systems"**

(73) Proprietor: **Océ-Nederland B.V.**
**St. Urbanusweg 43**
**NL-5914 CC Venlo(NL)**

(72) Inventor: **Lapoutre, Charles**
**Gemini 42**
**NL-5591 SB Heeze(NL)**
Inventor: **Rolf, Gerard Hendrik**
**De Meeuwse Acker 12-53**
**NL-6546 DK Nijmegen(NL)**

(74) Representative: **Hanneman, Henri W.A.M. et al**
**Océ-Nederland B.V. Patents and Information**
**Postbus 101**
**NL-5900 MA Venlo(NL)**

## Description

This invention relates to an office automation system, comprising intelligent units interconnected by a local network and each provided with a processing unit and a memory, in which memory there are program modules which are suitable for performing a specific task, in which system a unit can have specific tasks performed by a module in another unit, the unit which wishes to subcontract a specific task establishing a connection with the module required to perform that task, the connection being established by reference to an address list in which are written all the modules available in the system.

A system of this kind is known from "The P3000 office computer system", Philips Telecommunication Review, vol. 42, No. 4, 1984, pages 214-228.

This known system comprises various kinds of units, such as workstations and support stations.

Workstations are provided with a keyboard, a display screen and a processing unit having one or more microprocessors. Support stations are intended to perform a number of specialised tasks for the workstations, e.g. providing communication with other units, printers and mass memories, for which purpose they also have their own intelligence.

The units are interconnected by means of a data network. In this way they can exchange data and make joint use of specialised equipment.

A specific office activity can be regarded as a collection of sub-tasks requiring to be performed. To this end, a unit has available a number of modules which perform the sub-tasks. These modules are in fact programs which can be performed by the central microprocessor in the unit. Not every task or sub-task can be performed in each unit. When it is required to perform a task of this kind, the unit can search for a connection to another unit and instruct that unit to perform the required task.

The organisation of this is controlled by the known office automation system itself. As far the workstation operator is concerned, it is often not relevant to know where an order given by him is performed, provided that such order is performed. To this end the units are provided with an address list of all the modules present in the system with their address, which is the place in the system where the module is located.

When performance of a specific task is required the unit searches for the associated module in its address list and establishes connection therewith in accordance with the data in that address list.

In this connection problems may arise if one or more modules in the system become inoperative, for example because the unit in which they are running starts to malfunction. Problems may also arise if extra modules come available, for example as a result of an extra unit being connected to the system.

There is therefore a need for a mechanism which always keeps the address lists of the units completely up to date, so that the system retains maximum functionality even in the event of malfunctioning in one or more of the units and can in principle be expanded at any time by connecting extra units. As a result of such connection, however, it is possible that more than one copy of a module intended for performing a specific task will occur in the system. For that case there must be a clear selection mechanism which designates one of such identical modules.

The object of the invention is to provide an office automation system which is easy to expand and in which local malfunctioning does not affect the operation of the complete system or else only to a slight degree. According to the invention this object is attained in an office automation system according to the preamble, in that each unit is provided with a control program module, hereinafter referred to as the coordinator,

- which controls the address list in the memory of that unit,
- which is provided with means for determining the loading of that unit,
- which is connected to the coordinators in all the other units and constantly transmits thereto data concerning the contents of the address list in that unit and the loading of that unit,
- and which for each task designates the module required to perform that task,

and in that the address list also contains selection data for all the written-in modules, which selection data enable the coordinator to designate a specific module when identical modules are available in the system.

As a result, any changes in the system resulting from the failure or addition of modules are organisationally intercepted so that the resulting system is relatively insensitive to malfunctioning and can readily be expanded.

Another advantage of the invention is that the choice of a module is determined distinctly, i.e., each coordinator designates the same module at any specific time even if there are identical modules available in the system.

According to a first embodiment of the system according to the invention, the selection data for identical modules for specific first tasks involve that the identical module in the least loaded unit must be designated and the selection data for identical modules for specific second tasks involve a predetermined priority sequence. The criterion for the choice of a module is thus determined by the nature of the task. Some tasks require to be performed by a specific module for the entire system, even if there are different modules available. Only when that specific module breaks down, e.g. because of malfunction, can another - identical - module be designated. This designation will be effected on the basis of a predetermined priority sequence forming part of the selection data.

In the case of tasks which are not restricted to performance by a specific module, the selection criterion between identical modules may also be the loading of the units in which the associated modules are located. As a result, the response time of the system is kept short.

According to a second embodiment of the system according to the invention, the modules themselves inform the coordinator of the unit in which they are situated, their availability and the selection data applicable to them. This will occur, for example, on the start up of the system or after a malfunction in a unit has been cleared. As a result of this reporting procedure, the coordinator includes the associated module in its address list and transmits this change to the other coordinators in the system.

According to a third embodiment of the system according to the invention, when the coordinators do not receive the data from one or more other coordinators for a period longer than a predetermined time, they cancel from their address list the modules in the units in which said other coordinators are situated.

Consequently, the breakdown of a unit causes the minimum possible disturbance to the operation of the system. Tasks which were performed by modules in the broken down unit are automatically transferred to modules in satisfactorily operating units. This may give rise to problems for a task which is performed by a specific module for the entire system, because the data required for that task are stored in the memory of the broken down unit and therefore become inaccessible or even will disappear. Consequently, a module of this kind stores data required for its functioning in a memory. The module is provided with means to adapt the data corresponding to said data in the memory of the identical modules elsewhere in the system when the first-mentioned data are changed in connection with the performance of the task.

The advantage of this is that in the event of breakdown of the active module the next module according to the priority sequence can immediately take over the task of the broken down module.

Other characteristics and advantages of the invention will be apparent from the following description with reference to the accompanying drawings. Like references denote like parts.

In the drawings:

Fig. 1 is a diagrammatic drawing of an exemplified embodiment of a system according to the invention.

Fig. 2 is a diagramatic presentation of the operation of the system according to the invention.

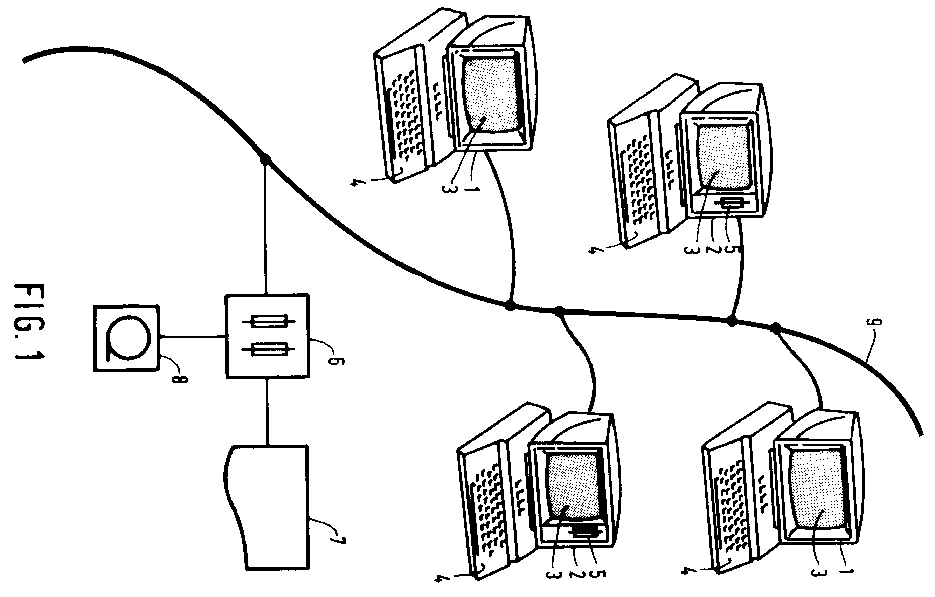

Fig. 1 is a diagrammatic representation of an office automation system according to the invention. The system comprises workstations 1,2 where the office workers perform their tasks. The workstations 1 include a display screen 3 and a keyboard 4 and the workstations 2 additionally contain a mass memory of their own (floppy disk) 5. The system also comprises at least one support station 6 and sometimes also peripheral equipment, such as a printer 7 or a large mass memory 8.

The workstations 1,2 and the support station 6 are interconnected by a local network 9. This network can also be used to connect peripherals 7,8 to the support station 6 but this connection can also be established directly by a separate cable. A support station 6 has its own processor and is adapted to perform all kinds of control tasks, e.g. control of the peripheral equipment, but also to perform a number of tasks normally performed by a workstation, in order to relieve the latter of load. Each station, workstation 1,2 or support station 6 has available program modules with which it can perform tasks. In performing its task a module may require assistance from another module. A connection must then be made, i.e. data must be exchanged between the two modules.

A control program is operative in each station 1, 2, 6 and is specifically adapted to coordinate the contacts between the modules. This control program, hereinafter referred to as the coordinator, updates a number of data, such as:

-  The loading of its own station. The data for this are supplied by the operating system of that station. This detail is always transmitted via the network to the coordinators of the other stations. The time interval which may elapse between two such reports is restricted to a maximum. If a station breaks down, then the reports from its coordinator cease. The other coordinators note the absence of the reports. They then wait for a predetermined time - which is at least equal to the maximum interval of time between two reports - for a new report. In the absence of this too, they conclude that the associated station is out of operation, or at least inaccessible. As a result, each coordinator knows whether all the other stations are still in operation and knows their loading.

-  A list of modules present in its station and the way in which these are to be called up. To this end, the modules are stored under a logic name and with the initial address of the assocciated module in the memory in the list. Each coordinator continually transmits its list of modules and changes therein to the coordinators of all the other stations.

- A list of all the modules available in the other stations and the way in which they are to be called up. This list is continually updated by reference to the reports from the other stations. In this way each coordinator always knows what modules in the complete system are in operation and where they are located.

Modules report to their own coordinator themselves (e.g. on the start up of the system) under a logic name. In such cases there may be two or more identical modules reporting. These will use the same name. Modules of which there are more than one available in the system may belong to one of two categories, i.e. "equivalent" or "substitute". This catagory is always transmitted to the coordinator upon reporting.

An "equivalent" module is intended for a task not restricted to a specific station, e.g. a text spelling check. A task of this kind can in principle be subcontracted to another station in the system without any difficulty.

A module of the "substitute" category is intended for a task which must be performed by only one module in the entire system, e.g. the updating of changes in the list with operators' access passwords. If there is more than one module available for that task, they are counted as a reserve in the event of the station which contains the active module breaking down due to a malfunction. To this end, these modules are given a sequence for coming into operation, e.g. by pre-programming. Modules of this kind report themselves as a "substitute" to their coordinator and in so doing indicate their place in the sequence.

Each coordinator writes the modules reporting to it in its list, with the addition of the category and, where applicable, the serial number, and then transmits these data to the other coordinators. In the event of breakdown of a station, this is detected by the coordinators as described hereinbefore. They then automatically cancel from their list the modules present in the broken-down station.

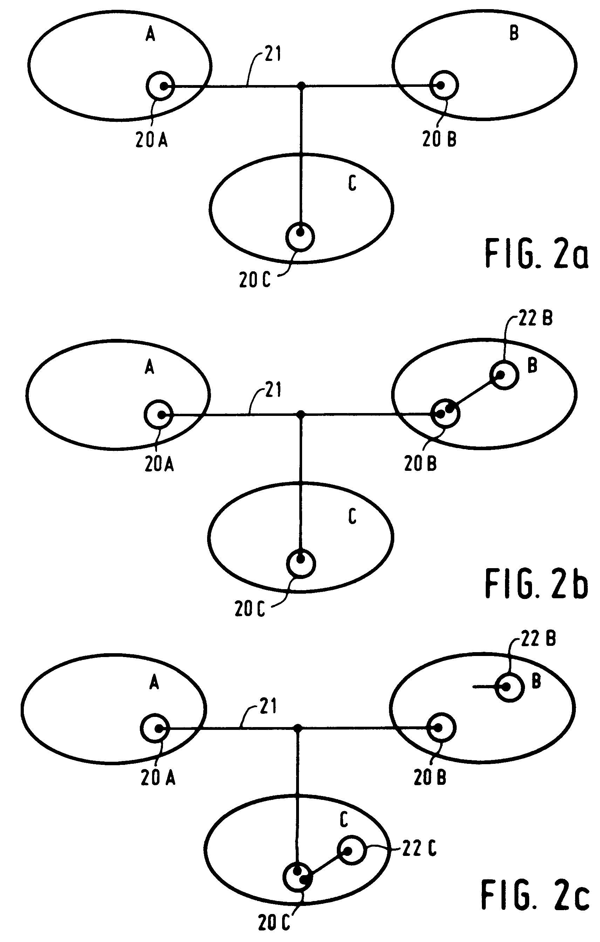

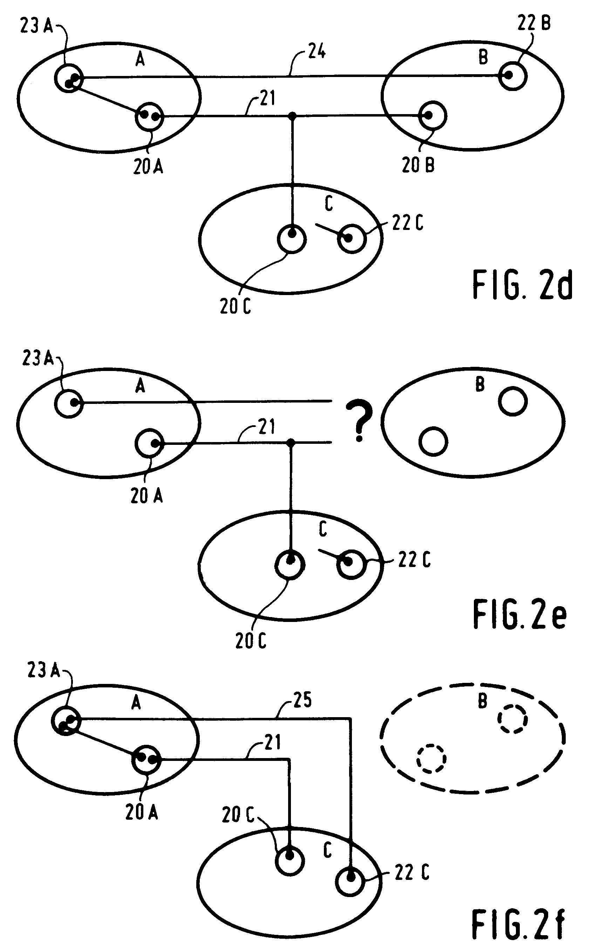

The operation of the coordinators will now be explained with reference to Fig. 2.

Fig. 2a illustrates the stations A, B and C, each provided with a coordinator 20A, 20B and 20C. The coordinators maintain mutual contact via the connection 21. This connection is a "logic" connection via the network 9 (Fig. 1).

Fig. 2b illustrates a module 22B which reports itself to its coordinator 20B and then is included in the list of that coordinator by name, category and initial address in the memory. In this example this module has the name TASK, belongs to the "substitute" category and has the serial number 1. The coordinator 20B writes in the module 22B and transmits the said data immediately to the other coordinators 20A and 20C which also write in the module 22B. The module is now brought to the standby position until there is work for it.

Fig. 2c illustrates a second module 22C which becomes written in. This module is intended for the same task as module 22B and therefore has the same name TASK, and is therefore also of the "substitute" category and has the serial number 2.

Fig. 2d illustrates the course of affairs when an active module 23A wishes to subcontract a task to a module having the name TASK. Module 23A asks its coordinator 20A for connection to a module TASK and obtains a connection 24 to module 22B having the serial number 1. Connection 24 is again a "logic" connection via the network 9 (Fig. 1). Module 22B then starts to perform the order.

It will now be assumed that the station containing module 22B breaks down as a result of a malfunction. This means that coordinator 20B also breaks down. Consequently, reports on the degree of loading that the coordinator 20B is required regularly to transmit are absent and the coordinators 20A and 20C concluded from this that station B is out of operation and cancel all the modules in that station, including module 22B, from their list. This is represented in Fig. 2e.

The module 23A notes the malfunction because it no longer receives any reply from the module 22B. Module 23A now again asks for a connection to a TASK module and now obtains connection 25 to the module having the serial number 2, 22C. This is represented in Fig. 2f. Since the order had not yet been completed, it must be completely or partially re-done by module 22C.

If the task commanded by module 23A has to be performed by a module of the "equivalent" category, the course of events is largely identical, but the criterian for selection of a module 22 is now based on the loading data of the stations which the coordinators transmit to one another via the connection 21. The module 22 in the least loaded station is then designated.

In the case of modules of the "substitute" category controlling a collection of data, such as the previously mentioned password collection, there is an extra precaution taken. If the station containing such a module breaks down, the collection of data which it controls has of course also become inaccessible. All the modules of the same type are therefore provided with the same collection of data stored in the memory of their station. The active module has access to those memory sections and if it does change its own collection of data within the framework of its task, it will also make this change to the collections of the other modules of its type without it being necessary to start up those modules.

Consequently, each collection of data is completely up to date. If the active module breaks down, an identical module elsewhere in the system can thus immediately take over its task.

The invention is not restricted to the above description. It will be apparent to the skilled addressee that numerous other embodiments are possible within the scope of the claims, e.g. systems in which the workstations are organised in groups each coordinated by a support station. The workstations may be permanently connected to the support station of their group and the support stations be interconnected via the network.

## Claims

1. An office automation system, comprising intelligent units (1,2,6) interconnected by a local network (9) and each provided with a processing unit and a memory, in which memory there are program modules (22B, 22C, 23A) which are suitable for performing a specific task, in which system a unit can have specific tasks performed by a module (22B; 22C) in another unit, the unit which wishes to subcontract a specific task establishing a connection with the module required to perform that task, the connection being established by reference to an address list in which are written all the modules available in the system, characterised in that each unit is provided with a control program module (20A, 20B, 20C), hereinafter referred to as the coordinator,
   - which controls the address list in the memory of that unit,
   - which is provided with means for determining the loading of that unit,
   - which is connected to the coordinators in all the other units and constantly transmits thereto data concerning the contents of the address list in that unit and the loading of that unit,
   - and which for each task designates the module required to perform that task,
   and in that the address list also contains selection data for all the written-in modules, which selection data enable the coordinator to designate a specific module when identical modules are available in the system.

2. An office automation system according to claim 1, characterised in that the selection data for identical modules for specific first tasks involve that the identical module in the least loaded unit must be designated and in that the selection data for identical modules for specific second tasks contain a predetermined priority sequence.

3. An office automation system according to any one of the prededing claims, characterised in that the modules themselves inform the coordinator of the unit in which they are situated, their availability and the selection data applicable to them.

4. An office automation system according to any one of the preceding claims, characterised in that when the coordinators do not receive the data from one or more other coordinators for a period longer than a predetermined time, they cancel from their address list the modules in the units in which said other coordinators are situated.

5. An office automation system according to any one of the preceding claims, characterised in that a module stores data required for its functioning in a memory and is provided with means to adapt the data corresponding to said data in the memory of the identical modules elsewhere in the system when the first-mentioned data are changed in connection with the performance of the task.

## Patentansprüche

1. Büroautomatisierungssystem mit intelligenten Einheiten (1,2,6), die durch ein lokales Netzwerk (9) verbunden sind und jeweils mit einer Prozessoreinheit und einem Speicher versehen sind, in welchem Speicher Programmodule (22B,22C,23A) gespeichert sind, die für die Ausführung einer bestimmten Aufgabe geeignet sind, in welchem System eine Einheit bestimmte Aufgaben von einem Modul (22B;22C) in einer anderen Einheit ausführen lassen kann, und die Einheit, die eine bestimmte Aufgabe delegieren will, eine Verbindung zu dem für die Ausführung dieser Aufgabe benötigen Modul herstellt, durch Zugriff auf eine Adressenliste, in der alle in dem System verfügbaren Module aufgeführt sind, dadurch **gekennzeichnet,** daß jede Einheit mit einem Steuerprogrammodul (20A,20B,20C) versehen ist, das nachfolgend als Koordinator bezeichnet werden soll und das
   - die Adressenliste in dem Speicher dieser Einheit verwaltet,
   - mit Mitteln zur Bestimmung der Belastung dieser Einheit versehen ist,
   - mit den Koordinatoren in allen anderen Einheiten verbunden ist und an diese ständig Daten übermittelt, die sich auf den Inhalt der Adressenliste in der betreffenden Einheit und auf die Belastung dieser Einheit beziehen, und

- für jede Aufgabe das zur Ausführung dieser Aufgabe erforderliche Modul bestimmt,

und daß die Adressenliste außerdem Wähldaten für alle aufgeführten Module enthält, welche Wähldaten es dem Koordinator gestatten, ein bestimmtes Modul zu bestimmen, wenn identische Module in dem System verfügbar sind.

2. Büroautomatisierungssystem nach Anspruch 1, dadurch **gekennzeichnet,** daß die Wähldaten für identische Module für bestimmte erste Aufgaben festlegen, daß das identische Modul in der am wenigsten belasteten Einheit bestimmt werden muß, und daß die Wähldaten für identische Module für bestimmte zweite Aufgaben eine vorgegebene Prioritätsfolge enthalten.

3. Büroautomatisierungssystem nach einem der vorstehenden Ansprüche, dadurch **gekennzeichnet,** daß die Module selbst den Koordinator der Einheit, in der sie sich befinden, über ihre Verfügbarkeit und über die auf sie anwendbaren Wähldaten informieren.

4. Büroautomatisierungssystem nach einem der vorstehenden Ansprüche, dadurch **gekennzeichnet,** daß die Koordinatoren, wenn sie für eine Zeitspanne, die länger als ein vorgegebenes Zeitintervall ist, keine Daten von einem oder mehreren anderen Koordinatoren erhalten, aus ihrer Adressenliste die Module derjenigen Einheiten streichen, in denen sich diese anderen Koordinatoren befinden.

5. Büroautomatisierungssystem nach einem der vorstehenden Ansprüche, dadurch **gekennzeichnet,** daß ein Modul Daten, die für seine Funktion benötigt werden, In einem Speicher ablegt und mit Mitteln versehen ist, durch die die Daten entsprechend den Daten in dem Speicher von identischen Modulen anderswo in dem System angepaßt werden, wenn die zuerst genannten Daten im Zusammenhang mit der Ausführung der Aufgabe geändert werden.

**Revendications**

1. Système d'automation de bureau, comprenant des unités intelligentes (1, 2, 6) reliées entre elles par un réseau local (9) et pourvues chacune d'une unité de traitement et d'une mémoire dans laquelle se trouvent des modules de programme (22B, 22C, 23A) qui sont agencés de façon à pouvoir exécuter une tâche spécifique, système dans lequel une unité peut obtenir que certaines tâches soient exécutées par un module (22B; 22C) faisant partie d'une autre unité, l'unité qui souhaite sous-traiter une certaine tâche établissant une liaison avec le module nécessaire pour exécuter cette tâche, cette liaison étant établie par référence à une liste d'adresses dans laquelle sont inscrits tous les modules disponibles dans le système, caractérisé en ce que chaque unité est pourvue d'un module à programme de contrôle (20A, 20B,20C), appelé ci-après coordinateur,

- qui contrôle la liste des adresses contenue dans la mémoire de cette unité,
- qui est pourvu de moyens permettant de déterminer l'état de chargement de cette unité,
- qui est connecté aux coordinateurs faisant partie de toutes les autres unités et qui transmet constamment à ces coordinateurs des données concernant le contenu de la liste d'adresses présente dans cette unité et l'état de chargement de cette dernière,
- et qui, pour chaque tâche, désigne le module devant exécuter cette tâche,

et en ce que la liste d'adresses contient aussi des données de sélection pour tous les modules inscrits, lesquelles données de sélection permettent au coordinateur de désigner un module déterminé lorsque des modules identiques sont disponibles dans le système.

2. Système d'automation de bureau suivant la revendication 1, caractérisé en ce que les données de sélection correspondant à des modules identiques associés à certaines premières tâches exigent que le module identique se trouvant dans l'unité la moins chargée doive être désigné, et en ce que les données de sélection correspondant à des modules identiques associés à certaines secondes tâches contiennent une séquence prédéterminée de priorités.

3. Système d'automation de bureau suivant l'une quelconque des revendications précédentes, caractérisé en ce que les modules eux-mêmes informent le coordinateur de l'unité dans laquelle ils sont situés de leur disponibilité et des données de sélection qui leur sont applicables.

4. Système d'automation de bureau suivant l'une quelconque des revendications précédentes, caractérisé en ce que, lorsque les coordinateurs ne reçoivent pas les données en provenance d'un ou plusieurs autres coordinateurs pendant un temps supérieur à une période prédéterminée, ils effacent de leur liste d'adresses les modules faisant partie des unités dans lesquelles ces autres coordinateurs sont situés.

5. Système d'automation de bureau suivant l'une quelconque des revendications précédentes, caractérisé en ce qu'un module range dans une mémoire des données nécessaires pour son fonctionnement et est pourvu de moyens permettant d'adapter les données correspondant auxdites données contenues dans la mémoire des modules identiques situés ailleurs dans le système, lorsque les premières données font l'objet d'une modification en liaison avec l'exécution de la tâche.

FIG. 1

FIG. 2a

FIG. 2b

FIG. 2c

FIG. 2d

FIG. 2e

FIG. 2f